# EUROPEAN PATENT APPLICATION

(11) **EP 4 761 025 A1**
(43) Date of publication of application: **17.06.2026**
(21) Application number: 24220392.5
(22) Date of filing: 16.12.2024
(51) Int. Cl.: H02G 3/12

(54) **BOX FOR INSTALLING MODULAR UNITS OF ELECTRICAL WIRINGS**

(71) Applicant: Vimar S.p.A., 36063 Marostica (VI) (IT)
(72) Inventor: BERTOLLO, Michele, 36060 Pianezze (VI) (IT); TRENTIN, Alessandro, 36040 Torri di Quartesolo (VI) (IT)
(74) Representative: Locas, Davide

(57) **Abstract**

A box for installing modular units of electrical wirings comprises a main member and fixing means which are configured to fix, by means of a threaded element, a support frame for modular units of electrical wirings, wherein the fixing means comprise a blocking member (5) and a respective housing element. The blocking member is configured to receive the threaded element by means of insertion and includes a deformable portion which comprises at least one thread portion. The deformable portion is configured in such a manner that in a non-deformed condition the thread portion can be engaged with the threaded element and in a deformed condition the threaded element is suitable for sliding with respect to the thread portion. The fixing means further comprise a first abutment surface and a second abutment surface which are formed on the housing element and on the deformable portion, respectively, the abutment surfaces being configured in such a manner that, when they are in mutual contact, a deformation of the deformable portion is at least partially prevented so as to keep the threaded element in engagement with the thread portion. The blocking member is associated in a movable manner with the housing element.

## Description

The invention relates to a box for installing modular units of electrical wirings and an installation group comprising such a box and a support for electric modules.

In the relevant technical sector with respect to civil and industrial electrical wirings, there are commonly used supports which can be fixed to walls and electric modules, such as, for example, control apparatuses (circuit-breakers, push-buttons, switches, etc.) or sockets, which can be connected in a stable manner to the support by means of suitable coupling systems.

These supports are typically fixed by using suitable wall-recessed boxes, inside which the electric wires to be connected to the modules for constructing the wiring are caused to converge.

In a typical domestic installation, the box comprises a box-shaped housing which is fixed definitively in a wall made of masonry or plasterboard or in a covering wall, such as the insulating wall of an outer insulation system, for example, by applying fixing material, for example, cement, expanded foam, adhesives and/or via mechanical fixing means, in order to stably maintain the position thereof over time in a suitable seat which is formed in the wall.

In numerous known solutions, the support for the installation of the modules is subsequently connected to the box by means of screws which allow fixing and removal thereof for possible maintenance, also taking into account the reference standards which require a specific stability when fixing the support.

Alternative fixing systems are described in EP0961374A1, EP3343714A1 or CN108110700A, but none of the solutions described in these patent documents allows the fixing of the supports to be made faster, at the same time ensuring stable and reversible fixing.

Other fixing systems are described in US 4,130,335 A, US 4,315,100 A, US 4,071,158 A, DE 15 15 740 A1 and CH 669 480 A5.

Therefore, there is perceived a need to have available fixing systems which allow more rapid fixing of the supports to the relevant boxes without this bringing about significant limitations in terms of the functionality and safety of the product.

The technical problem addressed by the present invention is therefore to provide a box for installing modular units of electric wirings which is structurally and functionally configured to at least partially overcome one or more of the disadvantages set out with reference to the cited prior art.

In the context of this problem, an object of the present invention is to provide a box and an installation group in which the fixing of the support for the modular units is simplified with respect to the known solutions, particularly in terms of time taken by the installer.

Another object of the present invention is to provide a box and an installation group which allow stable and reversible fixing of the support with the relevant modular units.

An object of the present invention is also to provide a box for installing electric modules which can also be used with supports of the conventional type.

An object of the present invention is also to provide a box and an installation group which allow the solutions of known installations to be improved in the context of a rational solution and at a relatively contained cost.

This problem is solved and at least one of these objects is at least partially achieved by the invention, in a first aspect, by means of a box for installing modular units of electrical wirings, comprising a main member and fixing means which are configured to fix, by means of a threaded element, a support for modular units of electrical wirings.

Preferably, the fixing means comprise a blocking member and a respective housing element.

Preferably, the blocking member is connected to the main member as a result of the presence of the respective housing element.

Preferably, the blocking member being configured to receive the threaded element by means of insertion.

Preferably, the blocking member includes a deformable portion which comprises at least one thread portion.

The deformable portion is preferably configured in such a manner that in a non-deformed condition the thread portion can be engaged with the threaded element and in a deformed condition the threaded element is suitable for sliding with respect to the thread portion along the axis defined by the thread.

Preferably, the deformable portion is configured so as to be urged into the deformed condition when the threaded element is inserted into the blocking member.

The fixing means preferably comprise a first abutment surface and a second abutment surface which are formed on the housing element and on the deformable portion, respectively.

The abutment surfaces are preferably configured in such a manner that, when they are in mutual contact, the deformation of the deformable portion is at least partially prevented so as to keep the threaded element in engagement with the respective thread portion.

Preferably, the blocking member is associated in a movable manner with the housing element so as to move the first abutment surface towards/away from the second abutment surface.

The fixing means are preferably configured in such a manner that the second abutment surface is urged away from the first abutment surface during insertion of the threaded element into the blocking member by means of translational movement in the insertion direction, thereby disengaging the threaded element and allowing the insertion thereof by urging it so as to be inserted without it rotating.

Therefore, it will be appreciated that, as a result of the presence of the deformable portion, it is possible to insert the threaded element which is, for example, formed by a screw, by simply inserting it in the blocking member. In fact, this insertion movement tends to deform the deformable portion and to release the engagement between the thread of the screw and the thread portion present in the blocking member.

By moving the blocking member, once the screw is inserted, it is possible to restore the engagement between the two threads, thereby blocking the screw and fixing the support on the box. This movement can be brought about by screwing the screw once it has been inserted in the blocking member because this movement allows the two abutment surfaces to be brought together until they are brought into contact.

In a second aspect thereof, the invention also relates to an installation group for modular units of electrical wirings, in general comprises a box for the installation comprising one or more of the features mentioned in relation to the first aspect, a support and a respective threaded element.

On the basis of this aspect, the invention also allows the advantages mentioned above to be afforded.

In each of the above-mentioned aspects, the present invention may further have at least one of the additional preferred features set out below.

Preferably, the fixing means are configured in such a manner that the second abutment surface is urged towards the first abutment surface during screwing of the threaded element into the blocking member.

As a result of this feature, it is possible to obtain the clamping required for the support frame on the box simply by screwing the threaded element.

Preferably, the abutment surfaces are inclined with respect to the insertion direction, with a particularly simple and robust construction solution.

Preferably, the blocking member comprises a main portion, the deformable portion preferably being formed as an extension of the main portion and being connected thereto in a flexible manner.

The deformable portion preferably has an elongate form and extends longitudinally from the main portion, preferably in a direction substantially parallel with the insertion direction.

Preferably, the blocking member comprises two deformable portions, each one including a respective thread portion. Preferably, the deformable portions face each other and are suitable for being moved apart from each other.

Preferably, the deformable portions are separated by recesses.

Preferably, each deformable portion comprises a respective second abutment surface.

As a result of this feature, the blocking group can be constructed in a simple manner, for example, by moulding, and allows a sufficiently high level of retention of the threaded element to be ensured when necessary.

Preferably, the blocking member can be moved in translation in the insertion direction with respect to the housing element.

In some embodiments, the blocking member can be moved in translation in the insertion direction with respect to the housing element between two limit positions. Preferably, the limit positions include a first limit position, in which the second abutment surface is spaced apart from the first abutment surface and a second limit position in which the second abutment surface is in contact with the first abutment surface.

It is thereby possible to move between the condition in which the deformable portion can be deformed to the position in which the deformation thereof is not allowed by acting on the threaded element, for example, urging it with a screwdriver during the insertion step and screwing it therewith in order to obtain the clamping required.

Preferably, the main member comprises side walls and a base wall, an internal volume being defined by the side walls and the base wall. Preferably, the housing element is connected to one of the side walls, preferably internally with respect to the internal volume.

In this manner, the box can be advantageously used in a state recessed in walls made of masonry by fixing it by means of mortar or other material

Preferably, the housing element defines a through-opening which is open at two opposite faces, the first abutment surface being formed on a face, which is directed towards the base wall, of the opposite faces.

Preferably, the opening comprises a flared region which is directed towards the base wall, the first abutment surface being formed on the flared portion.

These features also contribute to bringing about a stable connection between the two abutment surfaces.

Preferably, in the first limit position, the main portion is in contact with a second face of the two opposite faces, the second face being opposite the face in which the first abutment face is formed and, in the second limit position, the main portion is spaced apart from the second face.

Preferably, the fixing means comprise rotation prevention means which are configured so as to prevent a mutual rotation between the blocking member and the housing element about the insertion direction.

Preferably, the through-opening is in the form of a hole which has a closed perimeter, and which preferably has a substantially oval shape.

Preferably, the rotation prevention means comprise the substantially oval hole.

As a result of the provision of the rotation prevention means, it is possible to obtain the clamping of the threaded element on the blocking member simply by means of screwing. Furthermore, using a hole with a closed perimeter allows the rotation prevention means to be brought about with a simple and economical solution.

Preferably, the rotation prevention means comprise respective additional abutment surfaces which are formed on the housing element and blocking member. The additional abutment surfaces are in mutual contact when the blocking member is being supported on a face opposite the face on which the first abutment surface is formed, preventing the rotation when the threaded element is urged, for example, by the action of the screwdriver.

Preferably, the side walls and the base wall are made from plastics material. The housing element comprises a bracket which is made from metal material and which is connected to the side wall which supports a support which is made of plastics material and in which the first abutment surface is defined.

Preferably, the bracket is made from metal material and supports a support which is made of plastics material and in which the through-opening is defined.

Preferably, the blocking member is made from plastics material and is connected to the support.

This solution allows rapid and economical production of the box.

Preferably, the box comprises two fixing means on opposite side walls of the main member.

Preferably, the support frame is configured so as to be arranged in a manner supported on an external edge of the main member of the box.

Preferably, the support frame is configured in such a manner that, when the threaded element is screwed into the thread portion, the support frame is urged towards the housing element.

In the present description and in the claims appended thereto, a number of terms and expressions are considered to take up, unless otherwise explicitly indicated, the meaning expressed in the following definitions.

The expression "modular units for electrical wiring" is intended to be understood to mean any module which can be used in domestic, commercial or industrial electrical wiring and which is intended for control and generally for operating the components present in the wiring.

These modules may comprise, by way of non-limiting example, sockets, switches of various types, sensors, control devices, such as thermostats, or signalling devices, such as ringers, buzzers. This definition also includes ornamental elements, which are typically formed by dummy buttons with a covering function, for example, where other units of different types are not present.

The expression "substantially parallel" with reference to two directions, axes, planes or components, in the context of the present invention, will indicate a possible movement of ±10°, preferably ±5°, with respect to complete parallelism between the two directions, axes, planes or components.

The expression "substantially rectangular" is intended to be understood to mean that a component or element has a shape which resembles the shape of a rectangle but which may have rounded angles or may deviate from complete parallelism of the sides.

The features and advantages of the present invention will become clearer from the detailed description of preferred embodiments thereof which are illustrated by way of non-limiting example with reference to the appended drawings, in which:
- Figure 1 is a perspective, exploded view of the installation group according to the present invention;
- Figure 2 is a perspective, detailed, partially sectioned and partially exploded view of a box according to the present invention;
- Figure 3 is a perspective, detailed, partially sectioned view of the box of Figure 2;
- Figures 4A and 4B are two perspective, detailed, partially sectioned views which illustrate different steps of the installation of the group according to the present invention; and
- Figures 5A and 5B are two detailed and sectioned side views which illustrate different steps of the installation of the group according to the present invention.

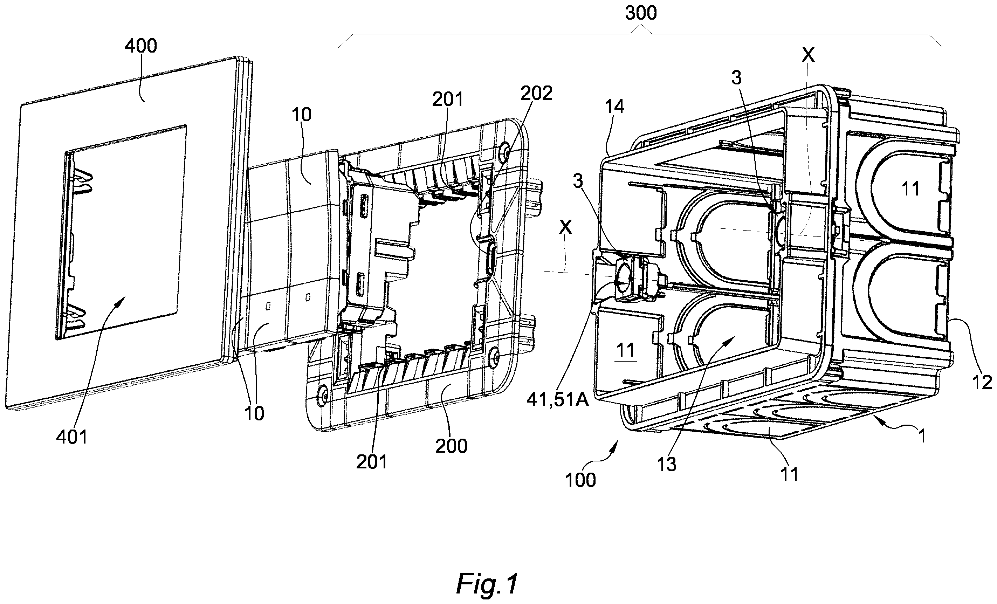

Initially with reference to Figure 1, an installation group of a modular unit 10 for electrical wiring is generally designated 300.

The installation group 300 particularly comprises a support frame 200 which allows both the fixing of the modular units 10 and the installation of the group in a wall, or other surface, by means of an installation box 100.

The box 100 may, for example, be embedded in a wall made of masonry and receive the conductors which pass through the paths of the electrical wiring and which are formed in the wall itself. The support frame 200 is therefore connected to the box 100, together with the modular units 10, thereby allowing the installation in the region of the wall. It will be appreciated that, in a conceptually similar manner, there may be provision for installation on other surfaces, such as, for example, a wall made of plasterboard or in a table stand.

The present invention is therefore used in any type of installation though being used preferably in the case of wall-mounted installation.

The installation is further preferably completed by a covering plate 400 which is removably fixed to the support frame 200 and configured so as to cover the frame itself.

In some embodiments, the support frame 200 preferably has a surround-like shape, preferably with a substantially rectangular perimeter.

There is defined at the centre of the surround an opening which is also substantially rectangular and in the region of which the modular units 10 can be received.

The covering plate 400 may also have a surround-like shape, an opening 401 being defined at the centre thereof.

As can be seen in the Figures, the opening 401 is configured in such a manner that the modular units 10 are closed by the covering plate 400 which develops peripherally relative thereto.

In preferred embodiments, the frame 200 further comprises snap-fit fixing means 201 which are intended to removably fix the modular units 10. In this manner, the frame may be suitable for supporting different types of modular units 10 which are selected by the installer during the provision of the electrical wiring. It may be observed, for example, that, in the embodiment illustrated, three electric modules which are formed by switches are present.

It is evident that modular units of different types may be provided in accordance with the definition provided above, and they may also be present in different numbers with respect to the exemplary embodiment illustrated here.

Preferably, the fixing means 201 are arranged in the region of the edge of the two long sides of the opening defined by the surround.

In some embodiments, there is also provision for the frame 200 to comprise connection means 202 which are configured so as to allow fixing between the support frame 200 and the box 100 by means of a threaded element 2, for example, formed by a screw, in accordance with methods which will be described in detail below.

To this end, the box 100 comprises fixing means 3 which are configured to fix, by means of the threaded element 2, the support frame 200 to the box 100 itself.

As may be better observed in the exemplary embodiment illustrated in Figure 1, the box 100 comprises a main member 1 which includes side walls 11 and a base wall 12, between which there is defined an internal volume 13 which allows the modular units 10 and conductors to be connected thereto for the wiring harness of the electrical wiring to be at least partially received.

Preferably, the box comprises two fixing means 3 which are arranged on opposite side walls 11 of the main member 1.

It may be observed that, in some embodiments, the box 100 is of rectangular shape and the fixing means 3 are arranged on the side walls which are associated with the short sides of the rectangle.

The support frame 200 may therefore be fixed to the box 100 by means of the threaded elements 2 which act on the fixing means 3, as will be illustrated in greater detail below.

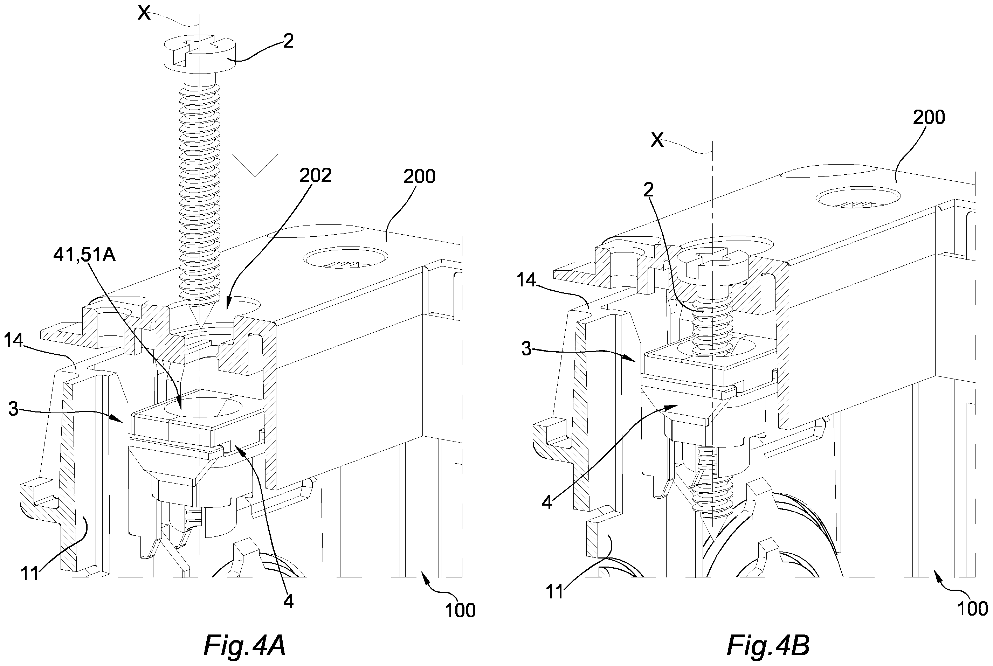

In this manner, the support frame 200 may be arranged so as to be supported on an external edge 14 of the main member 1 of the box 100, suitably fixing the frame 200 and the modular units 10, as may also be observed in Figures 4A and 4B.

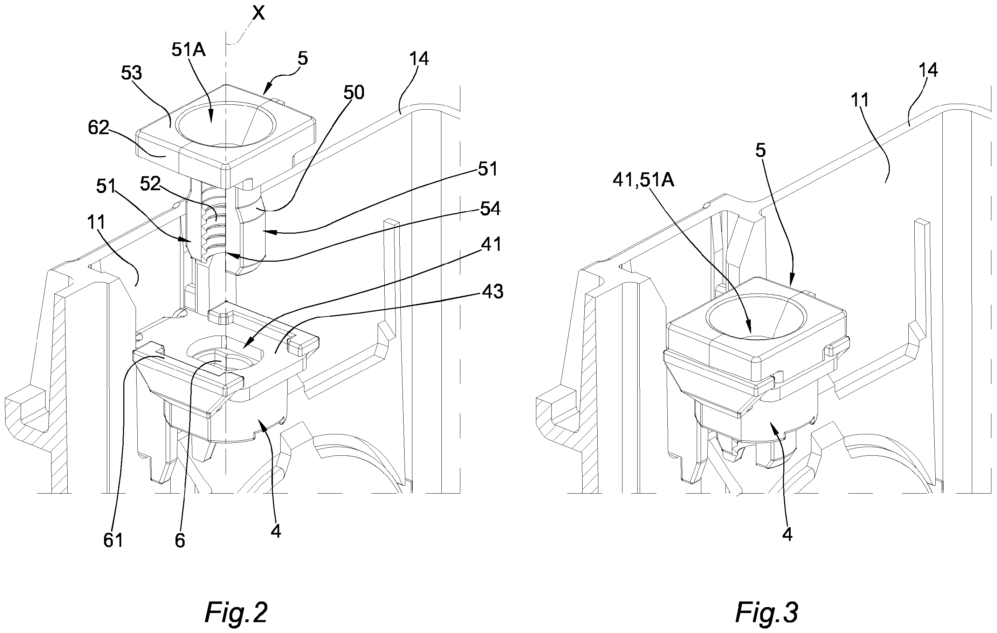

The fixing means 3 are illustrated in detail in a preferred embodiment in Figures 2, 3, 5A and 5B, and comprise a blocking member 5 and a respective housing element 4. As previously illustrated, the box may provide two fixing means and, consequently, two pairs of blocking members and housing elements. Reference will be made below to a single pair of blocking members and housing elements for the sake of simplicity of the description, it being understood that the same characteristics may also be applied to the other fixing means, if present.

The housing element 4 advantageously defines a through-opening 41 inside which the threaded element 2 can pass. In some embodiments, the through-opening 41 is in the form of a hole with a closed perimeter, preferably with a substantially oval shape. The housing element 4 is preferably connected to one of the side walls 11 of the box, is arranged directed towards the interior thereof, that is to say, is arranged internally with respect to the internal volume 13.

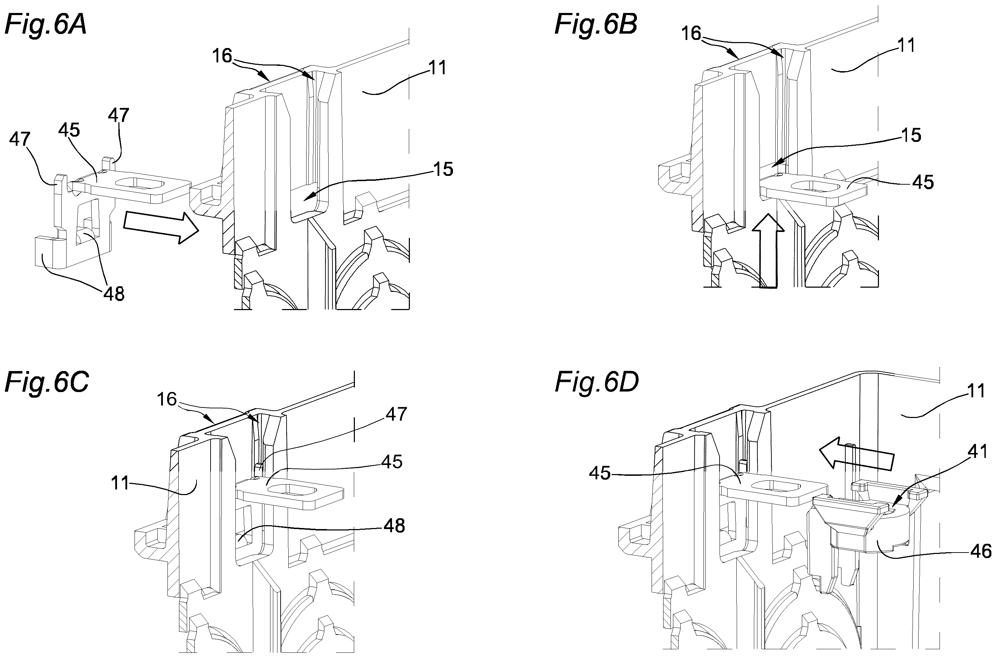

In some embodiments, the housing element 4 is in the form of a different member with respect to the main member 1 of the box 100, as may be observed in the exemplary embodiment illustrated in Figures 6A-D.

Advantageously, the housing element 4 may comprise a bracket 45 which is made of metal material and which engages in an interlocking manner with the side wall 11 of the main member 1. However, it may be observed that the main member 1 may be made from plastics material both so as to ensure insulation and for the benefit of constructional simplicity.

In some embodiments, the bracket has a substantially L-shaped form and is configured so as to be inserted in an opening 15 which is formed in the side wall 11.

In order to fix the bracket 45, there may be provision for it to further comprise a pair of lateral extensions 47 which slidingly engage with respective guides 16 which are formed on the side wall 11 itself.

The guides 47 advantageously extend on the side wall in a direction away from the base wall 12. In this manner, when the support frame 200 is fixed the bracket 45 is urged in an insertion direction in the guide, thereby maintaining it in a stable direction.

The blocking of the bracket 45 is further brought about by means of one or more abutment elements 48 which block the advance of the lateral extensions 47 in the respective guide 16.

As may be observed in Figure 6D, the bracket 45 which is made of metal material preferably supports a support 46 which is made of plastics material and with which the blocking member 5 is combined in accordance with methods described in greater detail below.

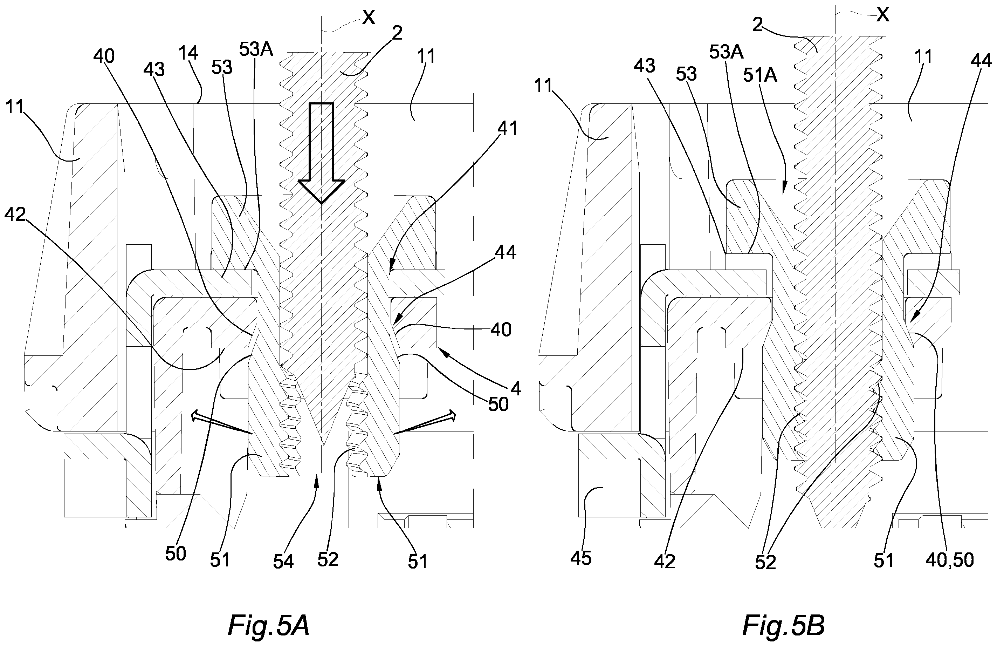

Now with reference to Figures 2 and 5A again, the blocking member 5 is preferably inserted through the through-opening 41 and is intended to receive the threaded element 2 for fixing the support frame 200.

In some embodiments, the blocking member 5 has in turn a through-opening 51A which is aligned with the opening 41 of the housing element 4.

The opening 51A and generally the blocking member 5 are configured to receive the threaded element 2 by means of insertion, consequently defining an insertion direction X.

Still with reference to Figures 2 and 5A, it may be observed that the blocking member 5 preferably comprises a main portion 53 and a pair of deformable portions 51 which extend in the direction away from the portion 53.

The deformable portions 51 are separated by recesses 54 and are flexibly connected to the main portion 53 so as to be able to be moved apart from each other.

In fact, it may be observed in Figure 5A that the insertion of the threaded element 2 through the opening 51A tends to widen the two deformable portions 51, bending them and moving them apart from each other.

It may also be observed that the deformable portions 51 have a respective thread portion 52 which is configured to engage with the threaded element 2.

When the two deformable portions 51 widen, the thread present on the threaded element 2 becomes disengaged from the thread present in the thread portions 52, therefore allowing the threaded element 2 to be inserted into the blocking member 5 simply by urging it therein in the direction X without it being necessary to rotate it in order to screw it in.

More generally, there may also be present a single deformable portion 51 which is configured so that in a non-deformed condition the thread portion 52 engages with the threaded element 2 when it is inserted by being screwed into the blocking member 5 while, in a deformed condition, the threaded element 2 can slide with respect to the thread portion 52 in the respective insertion direction X.

Furthermore, the deformable portion(s) 51 is/are further configured so as to be urged into the above-mentioned deformed condition when the threaded element 2 is inserted into the blocking member 5.

Still with reference to Figures 2 and 5A, the fixing means 3 further comprise a first abutment surface 40 and a second abutment surface 50 which are formed on the housing element 4 and on the deformable portion 51, respectively.

In some embodiments, the first abutment surface 40 is formed in the region of a flared region 44 which is formed in the region of the opening 41. In particular, the opening 41 is open at two opposite faces 42, 43 and the flared region 44 is formed in the region of the face 42 which is directed towards the base wall 12 of the main member 1.

In preferred embodiments, the first abutment surface 40 is therefore inclined with respect to the insertion direction X.

It may also be observed that, if the housing element 4 is formed by means of a bracket 45 and support 46, as in the previously described embodiments, the first abutment surface 40 can advantageously be formed on the support 46.

However, the second abutment surface 50 is preferably formed, on each deformable portion 51, in the region of a respective face which is directed towards the exterior with respect to the opening 51A.

This face is advantageously opposite the zone in which the thread portion 52 is formed.

It may further be observed that the second abutment surface 50 is also therefore inclined with respect to the insertion direction X with an opposite inclination with respect to the inclination of the first abutment surface 40.

As may be observed in Figures 5A and 5B, the blocking member 5 can be moved in translation in the insertion direction X with respect to the housing element 4.

In preferred embodiments, the blocking member 5 can move between two limit positions: a first position, which can be seen, for example, in Figure 5A and in which the main portion 53 is being supported by means of a respective surface 53A thereof on the face 43 of the housing element 4 and the second abutment surface 50 is spaced apart from the first abutment surface 40, and a second position, in which the second abutment surface 50 is in contact with the first abutment surface 40 and the surface 53A is spaced apart from the face 43 of the housing element 4. In this second position, which is illustrated in Figure 5B, the blocking member is further away from the base wall 12 and the main portion 53 is raised with respect to the face 43.

The abutment between the two abutment surfaces 40, 50 prevents the widening of the deformable portions 51 and retains the threaded element 2 in engagement with the thread portion 52.

Generally, therefore, it may be observed that the two abutment surfaces 40, 50 are configured in such a manner that, when they are in contact with each other, the deformation of the deformable portion 51 is at least partially prevented so as to retain the housing element 4 in engagement with the thread portion 52.

When the abutment surfaces are spaced apart from each other, however, it is possible to release the deformable portions 51 and to disengage the threads as described above.

In general, the contact between the abutment surfaces is brought about by providing for movable association of the blocking member 5 with the housing element 4 so as to move the first abutment surface 40 towards/away from the second abutment surface 50.

It is thereby possible to move between the two operating positions of the blocking member 5, one position in which the deformable portions 51 can be deformed and the other one in which this capacity is prevented.

The fixing means 3 are further configured in such a manner that the second abutment surface 50 is urged away from the first abutment surface 40 when the threaded element 2 is inserted by means of an urging action in the direction X in the blocking member 5.

In the embodiment of Figure 5A, the thread of the threaded element 2 urges the blocking member 5 downwards, moving the second abutment surface 50 away from the first abutment surface 40 and allowing the flexion of the deformable portions 51.

In this manner, by urging the threaded element 2 further, it is possible to insert it without carrying out the screwing thereof.

Once the threaded element 2 has reached the desired position, for example, in the case of a screw, when the head of the screw is in abutment with the support frame 200, it is possible to screw the threaded element 2, bringing the two abutment surfaces 40, 50 into contact and maintaining the thread of the threaded element 2 in engagement with the thread portions 52.

In fact, as illustrated above, in the absence of a load on the deformable portions 51, the thread of the threaded element 2 remains in engagement with the thread portion 52. The second abutment surface 50 is thereby urged towards the first abutment surface 40 during the screwing of the threaded element 2 in the blocking member 5 until reaching the abutment state between the two surfaces 40, 50, preventing the deformation of the deformable portions 51.

Therefore, this allows the threaded element 2 to be further clamped, reaching a clamping torque sufficient to obtain a stable connection between the support frame 200 and the box 100.

In fact, it will be appreciated that this torque may represent a requirement fixed by the reference standards and, consequently, the possibility of achieving the above-mentioned objective is particularly advantageous.

In order to simplify the action of screwing the threaded element 2, the fixing means 3 may comprise rotation prevention means 6, which can be seen, for example, in Figure 2 and which are configured so as to prevent a mutual rotation between the blocking member 5 and the housing element 4 about the insertion direction X.

In some embodiments, the rotation prevention means can be formed by using the hole with a substantially oval shape in the housing element, inside which the deformable portions 51 are inserted. By making provision for the blocking member 5 to have a shape which complements the shape of the hole in the region of a respective zone which is intended to remain inside the hole, it is possible to prevent the rotation of the member 5.

In some embodiments, the rotation prevention means 6 may comprise, additionally or alternatively to the above-mentioned solution, respective additional abutment surfaces which are formed on the housing element 4 and blocking member 5, which can be seen in the exemplary embodiment of Figure 2.

The additional abutment surfaces 61, 62 are in mutual contact when the blocking member 5 is being supported on the face 43 of the housing element 4 and are configured so as to prevent the rotation between the member 5 and the element 4.

The invention thereby solves the problem proposed, at the same time achieving a number of advantages. In particular, the fixing process of the support frames is substantially accelerated since the action of inserting the screws provided by the box according to the present invention is substantially faster with respect to complete screwing in the respective seat. The box according to the present invention further ensures the reversibility of the connection and allows a sufficiently stable connection to be obtained.

## Claims

1. A box (100) for installing modular units (10) of electrical wirings, comprising a main member (1) and fixing means (3) which are configured to fix, by means of a threaded element (2), a support frame (200) for modular units (10) of electrical wirings, wherein the fixing means (3) comprise a blocking member (5) and a respective housing element (4), the blocking member (5) being configured to receive the threaded element (2) by means of insertion and including a deformable portion (51) which comprises at least one thread portion (52), the deformable portion (51) being configured in such a manner that in a non-deformed condition the thread portion (52) can be engaged with the threaded element (2) and in a deformed condition the threaded element (2) is suitable for sliding with respect to the thread portion (52) in a respective insertion direction (X), the deformable portion (51) further being configured so as to be urged into the deformed condition when the threaded element (2) is inserted into the blocking member (5), the fixing means (3) further comprising a first abutment surface (40) and a second abutment surface (50) which are formed on the housing element (4) and on the deformable portion (51), respectively, the abutment surfaces (40, 50) being configured in such a manner that, when they are in mutual contact, a deformation of the deformable portion (51) is at least partially prevented so as to keep the threaded element (4) in engagement with the thread portion (52), the blocking member (5) being associated in a movable manner with the housing element (4) so as to move the first abutment surface (40) towards/away from the second abutment surface (50), the fixing means (3) being configured in such a manner that the second abutment surface (50) is urged away from the first abutment surface (40) during insertion of the threaded element (2) into the blocking member (5) by means of translational movement in the insertion direction (X).

2. A box (100) according to the preceding claim, wherein the blocking member (5) is configured to be movable in translation in the insertion direction (X) with respect to the housing element (4) between two limit positions, a first limit position, in which the second abutment surface (50) is spaced apart from the first abutment surface (40), and a second limit position, in which the second abutment surface (50) is in contact with the first abutment surface (40).

3. A box (100) according to the preceding claim, wherein the housing element (4) defines a through-opening (41), through which the threaded element (2) can pass, the through-opening being open at two opposite faces (42, 43), the first abutment surface (40) being formed on one of the opposite faces (42, 43).

4. A box (100) according to the preceding claim, wherein the first abutment surface (40) is formed in the region of a flared region (44) which is formed in the region of the opening (41).

5. A box (100) according to claim 3 or 4, wherein the blocking member (5) comprises a main portion (53), the deformable portion (51) being formed as an extension of the main portion (53), and wherein there is defined a second face (43) opposite the face in which the first abutment surface (40) is formed, the main portion (53) being in contact with the second face (43) in the first limit position and, in the second limit position, the main portion (53) being spaced apart from the second face (43).

6. A box (100) according to any one of the preceding claims, wherein the fixing means (3) are configured in such a manner that the second abutment surface (50) is urged towards the first abutment surface (40) during screwing of the threaded element (2) into the blocking member (5).

7. A box (100) according to any one of the preceding claims, wherein the blocking member (5) comprises a main portion (53), the deformable portion (51) being formed as an extension of the main portion (53) and being connected thereto in a flexible manner, and wherein the deformable portion (51) has an elongate form and extends longitudinally from the main portion (53) in a direction substantially parallel with the insertion direction (X).

8. A box (100) according to any one of the preceding claims, comprising two deformable portions, each one including a respective thread portion (52), the deformable portions (51) facing each other and being suitable for being moved apart from each other, the deformable portions (51) being separated by recesses (54).

9. A box (100) according to claim 8, wherein each deformable portion (51) comprises a respective second abutment surface (50).

10. A box (100) according to any one of the preceding claims, wherein the main member (1) comprises side walls (11) and a base wall (12), an internal volume (13) being defined by the side walls (11) and the base wall (12), wherein the housing element (4) is connected to one of the side walls (11), preferably internally with respect to the internal volume (13).

11. A box (100) according to any one of the preceding claims, wherein the fixing means (3) comprise rotation prevention means (6) which are configured so as to prevent a mutual rotation between the blocking member (5) and the housing element about the insertion direction (X).

12. A box (100) according to the preceding claim when dependent on claim 3, wherein the through-opening (41) is in the form of a hole which has a closed perimeter, and which preferably has a substantially oval shape, and wherein the rotation prevention means comprise the substantially oval hole.

13. A box (100) according to the preceding claim when dependent on claim 2, wherein the rotation prevention means (6) comprise respective additional abutment surfaces (61, 62) which are formed on the housing element (4) and blocking member (5), the additional abutment surfaces (61, 62) being in mutual contact when the blocking member (5) is in the second limit position.

14. A box (100) according to any one of the preceding claims when dependent on claim 3, wherein the housing element (4) comprises a bracket (45) which is made from metal material and which supports a support which is made of plastics material and in which the first abutment surface (40) is defined, the bracket (45) made from metal material supports a support (46) made of plastics material, in which the through-opening (41) is defined, the blocking member (5) being made from plastics material and connected to the support (46).

15. An installation group (300) according to any one of the preceding claims, comprising a box (100) according to any one of the preceding claims, a support frame (200) and at least one threaded element (2).
